# EUROPEAN PATENT SPECIFICATION

(11) **EP 4 254 015 B1**
(45) Date of publication and mention of the grant of the patent: **22.04.2026**
(21) Application number: 21902379.3
(22) Date of filing: 22.11.2021
(51) Int. Cl.: G01S 19/39, G01S 19/14

(54) **POSITIONING ACCURACY EVALUATION METHOD AND APPARATUS**
VERFAHREN UND VORRICHTUNG ZUR BESTIMMUNG DER POSITIONIERUNGSGENAUIGKEIT
PROCÉDÉ ET APPAREIL D'ÉVALUATION DE PRÉCISION DE POSITIONNEMENT

(30) Priority: 11.12.2020 CN 202011460374
(43) Date of publication of application: 04.10.2023
(73) Proprietor: Shenzhen Yinwang Intelligent Technologies Co., Ltd., Shenzhen, Guangdong 518129 (CN)
(72) Inventor: ZHANG, Guolong, Shenzhen, Guangdong 518129 (CN); LI, Bo, Shenzhen, Guangdong 518129 (CN); LIU, Jianqin, Shenzhen, Guangdong 518129 (CN)
(74) Representative: Thun, Clemens
(86) International application number: PCT/CN2021/132157
(87) International publication number: WO 2022/121672

(56) References cited:
- CN-A- 102 981 168
- CN-A- 107 942 350
- CN-A- 111 045 036
- CN-A- 111 551 190
- US-A1- 2012 139 775
- US-A1- 2020 132 855
- TAN JUN: "Research on Satellite Positioning Availability Evaluation and Prediction Method in Railway Scenario", CHINESE MASTER'S THESES FULL-TEXT DATABASE, no. 1, 15 January 2020 (2020-01-15), ??, pages 1 - 119, XP055942177, ISBN: 978-4-422-11733-1
- NABIL M DRAWIL ET AL: "GPS Localization Accuracy Classification: A Context-Based Approach", IEEE TRANSACTIONS ON INTELLIGENT TRANSPORTATION SYSTEMS, IEEE, PISCATAWAY, NJ, USA, vol. 14, no. 1, 1 March 2013 (2013-03-01), pages 262 - 273, XP011495818, ISSN: 1524-9050, DOI: 10.1109/TITS.2012.2213815
- TAN, JUN: "Research on Satellite Positioning Availability Evaluation and Prediction Method in Railway Scenario", CHINESE MASTER'S THESES FULL-TEXT DATABASE, ELECTRONIC JOURNAL, ENGINEERING SCIENCE, no. 1, 15 January 2020 (2020-01-15), pages 1 - 119, XP055942177, ISSN: 1674-0246

## Description

### TECHNICAL FIELD

This application relates to the field of vehicle positioning technologies, and in particular, to a positioning accuracy evaluation method and apparatus.

### BACKGROUND

A satellite navigation positioning technology is an all-time, all-weather, high-accuracy positioning technology. In an open environment, satellite navigation positioning performance is optimal when it is ensured that a satellite signal is not blocked.

Currently, a global navigation satellite system (Global navigation satellite system, GNSS) generally includes a global positioning system (Global Positioning System, GPS), a BeiDou navigation satellite system (BeiDou Navigation Satellite System, BDS), a global navigation satellite system (Global Navigation Satellite System, GLONASS), a Galileo satellite navigation system (Galileo satellite navigation system, Galileo), and the like.

However, when the GNSS is used in different fields or carriers, an effective satellite signal received by a carrier varies with an environment, and positioning performance varies greatly. It is difficult to generalize the positioning performance, that is, it is difficult to give a reasonable evaluation mechanism and accuracy evaluation method. Currently, the satellite navigation positioning technology is one of important means for various ground vehicles, especially intelligent connected vehicles, to obtain high accuracy absolute position information. However, a satellite signal is likely to be interfered or blocked by the outside. This makes positioning accuracy of a vehicle-mounted navigation positioning system drop sharply or even fail. Therefore, how to comprehensively and objectively evaluate positioning accuracy has become a current focus in the field of intelligent connected vehicles. However, currently, there is no better positioning accuracy evaluation method for a GNSS-based vehicle-mounted navigation device or system.

In the prior art, TAN JUN: "Research on Satellite Positioning Availability Evaluation and Prediction Method in Railway Scenario", CHINESE MASTER'S THESES FULL-TEXT DATABASE, no. 1, 15 January 2020 (2020-01-15), pages 1-119, investigates possibilities to evaluate and predict the satellite positioning availability in railway scenarios.

Further, NABIL M DRAWIL ET AL: "GPS Localization Accuracy Classification: A Context-Based Approach", IEEE TRANSACTIONS ON INTELLIGENT TRANSPORTATION SYSTEMS, IEEE, PISCATAWAY, NJ, USA, vol. 14, no. 1, 1 March 2013 (2013-03-01), pages 262-273, provides a context-based approach for a GPS localization accuracy classification.

### SUMMARY

This application provides a positioning accuracy evaluation method and apparatus, to comprehensively evaluate positioning accuracy of a GNSS-based vehicle-mounted navigation device or system under a dynamic vehicle-mounted driving condition. In particular, the present invention is defined by the subject matter of the independent claims. Preferred embodiments of the invention are further defined by the dependent claims.

According to a first aspect, this application provides a positioning accuracy evaluation method. The method includes: determining a scenario in which a to-be-measured positioning device is located, and determining positioning accuracy of the to-be-measured positioning device in the scenario, where the scenario is related to a quantity of different satellite signals received by the to-be-measured positioning device at a same moment.

By using the foregoing method, scenarios are distinguished based on the quantities of different satellite signals received by the to-be-measured positioning device at the same moment, and a scenario classification can be defined through a quantized value of the quantity of satellite signals, so that comprehensive scenario division can be obtained, and evaluation of the positioning accuracy of the to-be-measured positioning device is objective and comprehensive. This meets requirements for high reliability and security of a satellite navigation device in the field of intelligent connected vehicles.

According to the invention, the scenario is an open scenario, a semi-blocked scenario, or a fully-blocked scenario. In this way, positioning accuracy of the to-be-measured positioning device in the open scenario, the semi-blocked scenario, or a fully-blocked scenario may be determined.

Further, the scenario is further related to a positioning impact factor, and the positioning impact factor includes one or more of the following: a position dilution of precision (Position Dilution Of Precision, PDOP), a positioning state of the to-be-measured positioning device, and working duration of the to-be-measured positioning device in the positioning state. In this way, in addition to the quantity of received different satellite signals, scenarios can be more accurately distinguished with reference to the positioning impact factor, so that the scenario in which the to-be-measured positioning device is located can be more accurately determined.

The method for determining the scenario in which the to-be-measured positioning device is located further includes: when the quantity of different satellite signals received by the to-be-measured positioning device is greater than or equal to a first value, a PDOP value is less than a second value, and all the positioning states of the to-be-measured positioning device are fixed solutions, determining that the scenario in which the to-be-measured positioning device is located is the open scenario, when the quantity of different satellite signals received by the to-be-measured positioning device is greater than or equal to 0 and less than a third value, and the working duration of the to-be-measured positioning device in the positioning state is greater than a fourth value, determining that the scenario in which the to-be-measured positioning device is located is the fully-blocked scenario; and when the scenario in which the to-be-measured positioning device is located is not the open scenario and is not the fully-blocked scenario, determining that the scenario in which the to-be-measured positioning device is located is the semi-blocked scenario, where the first value is greater than the third value.

According to the foregoing method, based on an actual situation of some of the quantity of different satellite signals, the PDOP, the positioning state of the to-be-measured positioning device, and the working duration of the to-be-measured positioning device in the positioning state that are related to the scenario division, whether the scenario in which the to-be-measured positioning device is located is specifically the open scenario, the semi-blocked scenario, or the fully-blocked scenario may be accurately determined.

In a possible design, the semi-blocked scenario may include one or more sub-scenarios. In this way, the semi-blocked scenario may be divided into sub-scenarios, so that positioning accuracy of the to-be-measured positioning device in a more accurate scenario is subsequently obtained.

In a possible design, when the scenario in which the to-be-measured positioning device is located is the semi-blocked scenario, the method further includes: obtaining a positioning parameter of the to-be-measured positioning device and a correspondence between a positioning parameter interval set and a sub-scenario; and determining, based on the positioning parameter of the to-be-measured positioning device and the correspondence between the positioning parameter interval set and the sub-scenario, a sub-scenario in which the to-be-measured positioning device is located. The positioning parameter includes one of the quantity of different satellite signals received by the to-be-measured positioning device, the PDOP value, duration of low-quality positioning, and interval duration of low-quality positioning. Alternatively, the positioning parameter includes at least two of the quantity of different satellite signals received by the to-be-measured positioning device, the PDOP value, duration of low-quality positioning, interval duration of low-quality positioning, and an occurrence frequency of low-quality positioning. The positioning parameter interval set includes one or more of the following: a quantity interval of the received different satellite signals, a PDOP value interval, a duration interval of low-quality positioning, an interval duration interval of low-quality positioning, and an occurrence frequency interval of low-quality positioning. The low-quality positioning indicates that a positioning error of the to-be-measured positioning device is greater than a preset threshold.

According to the foregoing method, when the scenario in which the to-be-measured positioning device is located is the semi-blocked scenario, a specific sub-scenario of the scenario in which the to-be-measured positioning device is located may be further accurately determined based on the positioning parameter of the to-be-measured positioning device and the correspondence between the positioning parameter interval set and the sub-scenario. Then, the positioning accuracy of the to-be-measured positioning device in the sub-scenario is subsequently obtained.

In a possible design, when the to-be-measured positioning device is a non-integrated GNSS satellite navigation device, the method further includes: determining that the quantity of different satellite signals received by the to-be-measured positioning device is greater than or equal to a fifth value. In this way, the scenario may be determined for the non-integrated GNSS satellite navigation device only when the non-integrated GNSS satellite navigation device meets a specific condition, that is, the quantity of received different satellite signals is greater than or equal to a value.

In a possible design, when the correspondence between the positioning parameter interval set and the sub-scenario is obtained based on the positioning parameter interval set that is obtained after two groups of simulation positioning parameters corresponding to at least two simulations are combined and that is determined when a difference between position errors corresponding to the at least two simulations is not greater than a sixth value in any sub-scenario. A position error corresponding to any simulation is determined based on a sample measurement position corresponding to the any simulation and an actual position corresponding to the sample measurement position, the sample measurement position is determined by the to-be-measured positioning device in the any simulation based on a received sample satellite signal output by a satellite signal simulator, the sample satellite signal is output by the simulation satellite signal under a group of simulation positioning parameters, and the group of simulation positioning parameters includes a quantity of received different satellite signals, a PDOP value, duration of low-quality positioning, interval duration of low-quality positioning, and an occurrence frequency of low-quality positioning in the any sub-scenario.

According to the foregoing method, the correspondence between the positioning parameter interval set and the sub-scenario may be accurately obtained based on the positioning parameter interval set obtained after the two groups of simulation positioning parameters corresponding to the at least two simulations whose position errors are not greater than the sixth value are combined in each sub-scenario. Further, when the to-be-measured positioning device is in the semi-blocked scenario, the sub-scenario in which the to-be-measured positioning device is located may be further determined based on the correspondence between the positioning parameter interval set and the sub-scenario.

In a possible design, the sub-scenario may be one or more of the following six scenarios: an urban road overpass, a bridge hole, a single-sided blocked road, an interchange, a tree-lined road, or blocking by an urban high-rise building. In this way, a comprehensive scenario may be obtained based on an actual situation, and positioning accuracy of the to-be-measured positioning device in the comprehensive scenario may be further determined.

In a possible design, the sixth value may be greater than or equal to 1 centimeter.

In a possible design, the fifth value may be 3 + N, and N represents a quantity of different satellite navigation systems to which the satellite signals received by the to-be-measured positioning device belong. For example, when all the satellite signals come from a GPS, N = 1, and the fifth value may be 4. For another example, when the satellite signal comes from the GPS and a BDS separately, N = 2, and the fifth value may be 5. For another example, when the satellite signal comes from the GPS, the BDS, and a GLONASS separately, N = 3, and the fifth value may be 6.

In a possible design, the first value may be 15, 16, 17, or the like.

In a possible design, the second value may be 2, 3, or the like.

In a possible design, the third value may be 3 + N, and N represents a quantity of different satellite navigation systems to which the satellite signals received by the to-be-measured positioning device belong. For example, when all the satellite signals come from the GPS, N = 1, and the third value may be 4. For another example, when the satellite signal comes from the GPS and the BDS separately, N = 2, and the third value may be 5. For another example, when the satellite signal comes from the GPS, the BDS, and the GLONASS separately, N = 3, and the third value may be 6.

In a possible design, the fourth value may be 60 seconds (s), 59s, 61s, or the like.

According to a second aspect, this application further provides a positioning accuracy evaluation apparatus. The positioning accuracy evaluation apparatus is configured to implement the method in the first aspect or the possible design examples of the first aspect. The method may be implemented by hardware, or may be implemented by hardware executing corresponding software. The hardware or the software includes one or more modules corresponding to the foregoing method.

In a possible design, a structure of the positioning accuracy evaluation apparatus may include a first processing unit and a second processing unit. These units may perform corresponding functions in the first aspect or the possible design examples of the first aspect. For details, refer to detailed descriptions in the method example. Details are not described herein.

According to a third aspect, an embodiment of this application provides a computer-readable storage medium. The computer-readable storage medium stores program instructions. When the program instructions are run on a computer, the computer is enabled to perform the method according to any possible design of the first aspect. For example, the computer-readable storage medium may be any usable medium accessible to the computer. By way of example and not limitation, the computer-readable medium may include a non-transient computer-readable medium, a random-access memory (random-access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be used to carry or store expected program code in a form of an instruction or a data structure and can be accessed by the computer.

For each aspect of the second aspect and the third aspect and technical effects that may be achieved in each aspect, refer to the description of technical effects that may be achieved by each possible solution in the first aspect. Details are not described herein again.

### BRIEF DESCRIPTION OF DRAWINGS

FIG. 1a is a schematic diagram of an implementation environment according to this application;
FIG. 1b is a schematic diagram of another implementation environment according to this application;
FIG. 2 is a flowchart of a positioning accuracy evaluation method according to this application;
FIG. 3 is a schematic simulation diagram according to this application;
FIG. 4 is a schematic diagram of determining a sub-scenario in which a to-be-measured positioning device is located according to this application;
FIG. 5 is a schematic diagram of determining a sub-scenario in which a to-be-measured positioning device is located according to this application;
FIG. 6 is a schematic diagram of a relationship of impact on positioning accuracy of a to-be-measured positioning device in a sub-scenario according to this application;
FIG. 7 is a schematic diagram of a structure of a positioning accuracy evaluation apparatus according to this application; and
FIG. 8 is a structural diagram of a positioning accuracy evaluation apparatus according to this application.

### DESCRIPTION OF EMBODIMENTS

The following further describes in detail this application with reference to accompanying drawings.

Embodiments of this application provide a positioning accuracy evaluation method and apparatus, to comprehensively evaluate positioning accuracy of a GNSS-based vehicle-mounted navigation device or system under a dynamic vehicle-mounted driving condition. The method and the apparatus in this application are based on a same technical concept. Because problem-resolving principles of the method and the apparatus are similar, mutual reference may be made to implementations of the apparatus and the method, and repeated parts are not described again.

In this application, "and/or" describes only an association relationship between associated objects and represents that three relationships may exist. For example, A and/or B may represent the following three cases: Only A exists, both A and B exist, and only B exists. "At least one" means one or more, and "a plurality of" means two or more.

In this application, "example", "in an optional implementation", "in a specific implementation", or the like is used as an example, an illustration, or a description. Any embodiment or design scheme described as an "example" in this application should not be explained as being more preferred or having more advantages than another embodiment or design scheme. Specifically, the term "example" is used to present a concept in a specific manner.

In addition, terms such as "first" and "second" in this application are merely used for distinction and description, and cannot be understood as an indication or implication of relative importance or implicit indication of a quantity of indicated technical features, or an indication or implication of a sequence.

Because a satellite navigation signal is likely to be blocked and performance deteriorates, a satellite navigation receiver terminal device or a satellite navigation-based integrated navigation device usually statically performs a test in an open environment (for example, on a roof or at a dedicated test site), to provide a positioning performance indicator (for example, positioning accuracy). However, in the application field of intelligent connected vehicle-mounted positioning, a user is more concerned about positioning performance of a vehicle in an actual dynamic driving state. For example, after the vehicle drives from an open road to a tunnel, positioning accuracy of the foregoing satellite navigation receiver terminal device is significantly reduced. However, currently, positioning accuracy in a corresponding scenario under a dynamic vehicle-mounted driving condition has not been evaluated. Based on this, this application provides a positioning accuracy evaluation method, to comprehensively evaluate positioning accuracy of a vehicle-mounted navigation device or system based on a plurality of scenarios under a dynamic vehicle-mounted driving condition.

The positioning accuracy evaluation method provided in this embodiment of this application may be used for a vehicle-mounted GNSS navigation device (for example, a vehicle-mounted GNSS receiver terminal device), a vehicle-mounted GNSS and inertial navigation system (Inertial Navigation System, INS) integrated navigation device, or the like in an intelligent connected vehicle for positioning accuracy evaluation. Certainly, in addition to the foregoing vehicle-mounted navigation device, this application may also be directed to a positioning and navigation device or system of another ground transportation vehicle (for example, an engineering vehicle, a commercial vehicle, a light rail transit vehicle, or bike sharing) for positioning accuracy evaluation. In the following descriptions of this application, all the foregoing devices that need to perform positioning accuracy evaluation may be referred to as to-be-measured positioning devices. Certainly, the to-be-measured positioning device is merely an example of a name, and may further have another name. This is not limited in this application.

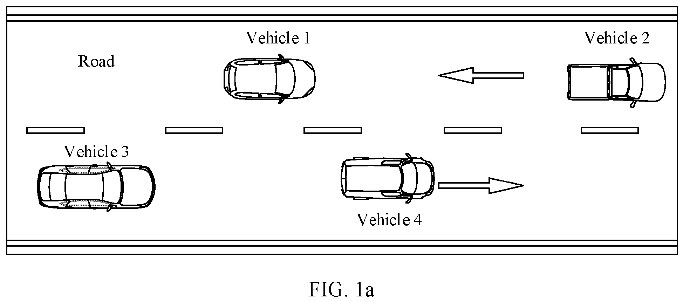

For example, FIG. 1a is a schematic diagram of an implementation environment. Four vehicles (a vehicle 1, a vehicle 2, a vehicle 3, and a vehicle 4) are driving in FIG. 1a. Each of the four vehicles includes a GNSS navigation device or a GNSS and INS integrated navigation device. Vehicle positioning may be implemented by using the GNSS navigation device or the GNSS and INS integrated navigation device in each vehicle. Positioning accuracy of the GNSS navigation device or the GNSS and INS integrated navigation device in each vehicle needs to be evaluated. In other words, the GNSS navigation device or the GNSS and INS integrated navigation device in each vehicle may be used as the to-be-measured positioning device in this application.

It should be noted that a road on which the four vehicles in FIG. 1a drive may be a highway, a tree-lined road, a mountain road, or the like. This is not limited in this application. In addition, the quantity of vehicles shown in FIG. 1a is merely an example. There may be more or fewer vehicles, and the navigation device in each vehicle (for example, the GNSS and INS integrated navigation device) can be evaluated.

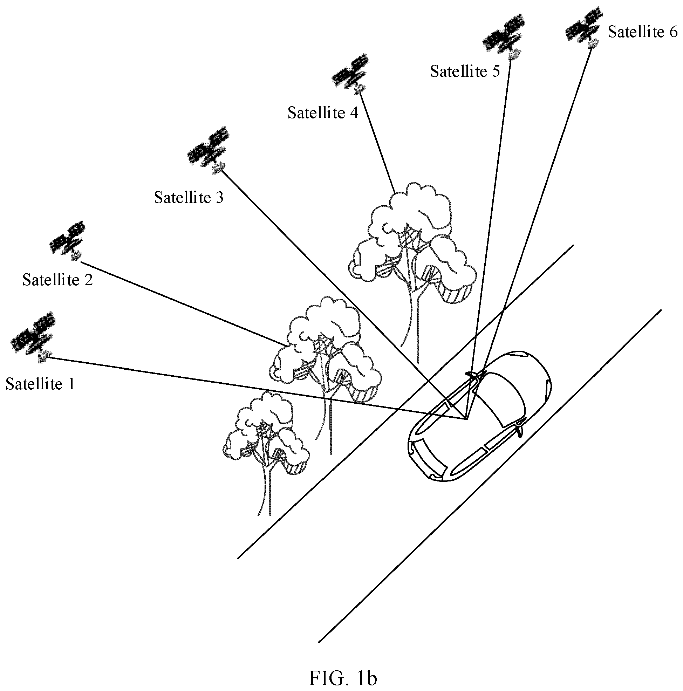

For another example, FIG. 1b is a schematic diagram of another implementation environment. In FIG. 1b, a vehicle drives on a tree-lined road, and at a moment when the vehicle drives on the tree-lined road, some satellite signals are blocked by trees. As a result, a to-be-measured positioning device in the vehicle cannot receive the blocked satellite signals. For example, as shown in FIG. 1b, there are six satellites transmitting satellite signals, but at a moment, satellite signals transmitted by satellites 2 and 4 are blocked by trees, and the to-be-measured device in the vehicle can only receive satellite signals transmitted by satellites 1, 3, 5, and 6.

It should be noted that the quantity of satellites in FIG. 1b is not limited to 6, and the quantity of satellite signals received by the to-be-measured positioning device of the vehicle at a moment on the tree-lined road is not limited to 4. This is merely an example herein, and is not intended to limit this application.

The positioning accuracy evaluation method provided in this application may be applied to a scenario in which factory test is performed on the to-be-measured positioning device in the vehicle, may be applied to a scenario in which a customer performs a qualification test on the to-be-measured positioning device, may be applied to a scenario in which positioning accuracy of to-be-measured positioning devices delivered by two different manufacturers is compared or another scenario in which positioning accuracy of the to-be-measured positioning device needs to be evaluated, or may be applied to a scenario in which performance is improved after a design of the to-be-measured positioning device is improved, to guide design improvement or related research.

In this application, the positioning accuracy evaluation method may be implemented by a positioning accuracy evaluation apparatus, and the positioning accuracy evaluation apparatus may be a device with an operation function, for example, a computer device. In the following application, an example in which the positioning accuracy evaluation apparatus is an execution body is used for description.

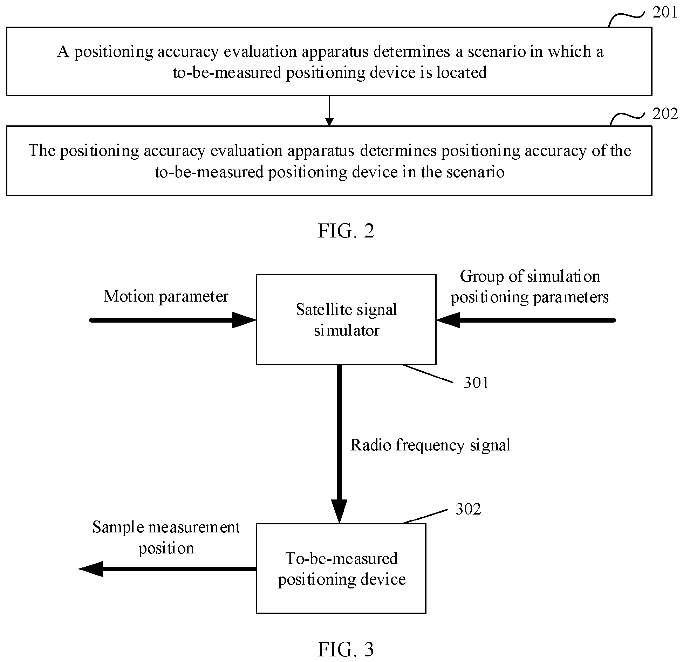

Based on the foregoing description, an embodiment of this application provides a positioning accuracy evaluation method. The positioning accuracy evaluation method may be used to evaluate positioning accuracy of a navigation device in any vehicle in FIG. 1a and FIG. 1b. The method may be implemented by the positioning accuracy evaluation apparatus. Refer to FIG. 2. A specific procedure of the method may include the following steps.

Step 201: A positioning accuracy evaluation apparatus determines a scenario in which a to-be-measured positioning device is located. The scenario is related to a quantity of different satellite signals received by the to-be-measured positioning device at a same moment.

Specifically, the quantity of different satellite signals received by the to-be-measured positioning device at the same moment refers to the quantity of different satellite signals received by the to-be-measured positioning device at a moment. That is, the same moment means that the to-be-measured positioning device receives the different satellite signals at a same moment.

The to-be-measured positioning device may be a non-integrated GNSS satellite navigation device, or may be a GNSS and INS integrated navigation device, where the GNSS and INS integrated navigation device is an integration of the GNSS satellite navigation device and an INS navigation device.

According to the invention, the scenario is divided into an open scenario, a semi-blocked scenario, or a fully-blocked scenario.

In an example not covered by the claimed invention, the scenario may be divided based only on the quantity of different satellite signals received by the to-be-measured positioning device at the same moment. In other words, quantities of received different satellite signals are in different value ranges, and may respectively correspond different scenarios. For example, the to-be-measured positioning device is in the open scenario when the quantity of received different satellite signals is in a first range. The to-be-measured positioning device is in the semi-blocked scenario when the quantity of received different satellite signals is in a second range. The to-be-measured positioning device is in the fully-blocked scenario when the quantity of received different satellite signals is in a third range. For example, the first range may be a quantity range greater than or equal to 15, the second range may be a quantity range greater than or equal to 0 and less than 4, and the third range may be a quantity range greater than or equal to 4 and less than 15. It should be noted that specific examples of the foregoing ranges are merely examples. It should be understood that the foregoing ranges may alternatively be other ranges, and are not listed one by one in this application. It should be noted that only three scenarios are used as examples for description. It should be understood that there may be more or fewer scenarios. This is not limited in this application.

By using the foregoing method, scenarios are distinguished based on the quantities of different satellite signals received by the to-be-measured positioning device at the same moment, and a scenario classification can be defined through a quantized value of the quantity of satellite signals, so that comprehensive scenario division can be obtained, and subsequent evaluation of the positioning accuracy of the to-be-measured positioning device is objective and comprehensive.

When the scenarios are divided only based on the quantities of received different satellite signals, division accuracy of the obtained scenarios may be low. To make the scenarios more accurate, in an optional implementation, the scenario may be further related to a positioning impact factor, and the positioning impact factor includes one or more of the following: a position dilution of precision (Position Dilution Of Precision, PDOP), a positioning state of the to-be-measured positioning device, and working duration of the to-be-measured positioning device in the positioning state. In this way, the scenario is determined with reference to the quantity of different satellite signals received by the to-be-measured positioning device and the positioning impact factor, so that the determined scenario can be more accurate, and further, estimated positioning accuracy of the to-be-measured positioning device can be more accurate.

Positioning states of the to-be-measured positioning device can usually be divided into a single-point positioning solution, a pseudorange differential solution, a float solution and a fixed solution based on a differential correction information type and an integer ambiguity calculation value type in a positioning value calculation process after the to-be-measured positioning device receives a satellite signal and differential correction information (Real-Time Kinematic, RTK) at the same time.

The PDOP is a point position or position dilution of precision, where a dilution of precision (Dilution Of Precision, DOP) is a type of quantitative indicator for measuring a geometric condition of a user when performing GNSS measurement, and is also referred to as a DOP value or a precision factor for short. The DOP value depends on distribution of navigation satellites in a user's field of view, and reflects a magnification effect of a geometrical shape formed by the to-be-measured positioning device and the satellites on a ranging error. Under a same ranging precision condition, a lower DOP value indicates a more robust geometrical shape formed by the to-be-measured positioning device and the satellites, a smaller magnification effect on the ranging error, and higher navigation accuracy provided by a GNSS service. For example, in a common open scenario, a quantity of different satellites signals received by a satellite navigation positioning device is greater than 15, and a PDOP value is less than or equal to 2. The value indicates higher satellite positioning accuracy. When the satellite navigation positioning device is blocked by urban buildings, a quantity of received satellite signals is greater than or equal to 4 but less than 8, and a PDOP value is greater than 6. The value indicates lower satellite positioning accuracy.

The working duration of the to-be-measured positioning device in the positioning state is a continuous working time period of the to-be-measured positioning device in a specific working condition. For example, the specific working condition may be that the quantity of different satellite signals received by the to-be-measured positioning device is greater than 4 and less than or equal to 15.

According to the invention, a specific method for determining, by the positioning accuracy evaluation apparatus, the scenario in which the to-be-measured positioning device is located is: When the quantity of different satellite signals received by the to-be-measured positioning device is greater than or equal to a first value, a PDOP value is less than a second value, and all positioning states of the to-be-measured positioning device are fixed solutions, the positioning accuracy evaluation apparatus determines that the scenario in which the to-be-measured positioning device is located is the open scenario; when the quantity of different satellite signals received by the to-be-measured positioning device is greater than or equal to 0 and less than a third value, and the working duration of the to-be-measured positioning device in the positioning state is greater than a fourth value, the positioning accuracy evaluation apparatus determines that the scenario in which the to-be-measured positioning device is located is the fully-blocked scenario; and when the scenario in which the to-be-measured positioning device is located is not the open scenario and is not the fully-blocked scenario, the positioning accuracy evaluation apparatus determines that the scenario in which the to-be-measured positioning device is located is the semi-blocked scenario, where the first value is greater than the third value.

According to the foregoing method, the positioning accuracy evaluation apparatus may accurately determine, according to an actual situation of some of the quantity of different satellite signals, the PDOP, the positioning state of the to-be-measured positioning device, or the working duration of the to-be-measured positioning device in the positioning state that is related to scenario division, whether the scenario in which the to-be-measured positioning device is located is specifically the open scenario, the fully-blocked scenario, or the semi-blocked scenario, and subsequently accurately obtain positioning accuracy of the to-be-measured positioning device in the specific scenario.

That all the positioning states of the to-be-measured positioning device are fixed solutions indicates the to-be-measured positioning device is always in a state of receiving the differential correction information and an integer ambiguity parameter is rounded to an integer to obtain a baseline vector solution.

It should be noted that, when the positioning accuracy evaluation apparatus determines that the scenario in which the to-be-measured positioning device is located is the fully-blocked scenario, the working duration of the to-be-measured positioning device in the positioning state is an unlocked time period. In other words, it is considered that the unlocked time period is a time period in which the to-be-measured positioning device cannot track valid satellite signals in the fully-blocked scenario, where a quantity of the valid satellite signals tracked by the to-be-measured positioning device is less than the third value.

In practice, all scenarios except the open scenario and the fully-blocked scenario may be divided into the semi-blocked scenario. It should be noted that the open scenario, the fully-blocked scenario, and the semi-blocked scenario are merely examples of names, and may alternatively have other names. This is not limited in this application.

Optionally, the first value may be 15, 16, 17, or the like, the second value may be 2, 3, or the like, and the third value may be 3 + N, where N represents a quantity of different satellite navigation systems to which the satellite signals received by the to-be-measured positioning device belong. For example, when all the satellite signals come from the GPS, N = 1, and the third value may be 4. For another example, when the satellite signal comes from the GPS and the BDS separately, N = 2, and the third value may be 5. For another example, when the satellite signal comes from the GPS, the BDS, and the GLONASS separately, N = 3, and the third value may be 6. The fourth value may be 60 seconds (s), 59s, 61s, or the like. Certainly, some or all of the first value, the second value, the third value, and the fourth value may be replaced with other values. Specific values of the foregoing values are not limited in this application.

Further, the semi-blocked scenario may be further divided into one or more sub-scenarios. In this way, the semi-blocked scenario may be divided into sub-scenarios, so that positioning accuracy of the to-be-measured positioning device in a more accurate scenario is subsequently obtained.

Optionally, the positioning accuracy evaluation apparatus may predetermine a correspondence between a positioning parameter interval set and a sub-scenario in the semi-blocked scenario. The positioning parameter interval set includes one or more of the following: a quantity interval of the received different satellite signals, a PDOP value interval, a duration interval of low-quality positioning, an interval duration interval of low-quality positioning, and an occurrence frequency interval of low-quality positioning. The low-quality positioning indicates that a positioning error of the to-be-measured positioning device is greater than a preset threshold. An occurrence frequency of low-quality positioning may be an occurrence frequency of low-quality positioning per hour. The correspondence between the sub-scenario of a quantization constraint and the positioning parameter interval set may be obtained according to this method. Specifically, the specific sub-scenario in which the to-be-measured positioning device is located may be determined by using the specific positioning parameter interval set in which the positioning parameter is located.

When the satellite signal is blocked by an object, a building, a dense tree, or the like, performance of the to-be-measured positioning device deteriorates, and the positioning error of the to-be-measured positioning device is large. As a result, positioning quality of the to-be-measured positioning device deteriorates, and this is referred to as low-quality positioning.

Specifically, when the positioning accuracy evaluation apparatus predetermines the correspondence between the positioning parameter interval set and the sub-scenario in the semi-blocked scenario, a specific method may be: The positioning accuracy evaluation apparatus obtains at least two sample measurement positions of the to-be-measured positioning device in any sub-scenario, where any sample measurement position is determined by the to-be-measured positioning device in one simulation based on a received sample satellite signal output by a satellite signal simulator, the sample satellite signal is output by the simulation satellite signal under a group of simulation positioning parameters, and the group of simulation positioning parameters includes a quantity of received different satellite signals, a PDOP value, duration of low-quality positioning, interval duration of low-quality positioning, and an occurrence frequency of low-quality positioning in the any sub-scenario; the positioning accuracy evaluation apparatus determines a position error between each sample measurement position and an actual position corresponding to each sample measurement position; when the positioning accuracy evaluation apparatus determines that a difference between position errors corresponding to at least two simulations is not greater than a sixth value, the positioning accuracy evaluation apparatus determines a positioning parameter interval set obtained after two groups of positioning parameters corresponding to the at least two simulations are combined, to obtain the positioning parameter interval set corresponding to the any sub-scenario; and the positioning accuracy evaluation apparatus determines the obtained correspondence between the positioning parameter interval set corresponding to the any sub-scenario and the any sub-scenario as a sub-scenario classification result.

The sixth value is greater than or equal to 1 centimeter (cm). It should be noted that the sixth value is merely an example, and may alternatively be another value. This is not limited in this application.

For example, in the foregoing process, a specific process of the sample satellite signal output by the satellite signal simulator in one simulation may be shown in a schematic simulation diagram shown in FIG. 3. Specifically, if a moving track of a vehicle is known, a motion parameter of the vehicle is input into the satellite signal simulator 301, so that the satellite signal simulator 301 transmits a satellite signal based on the assumed vehicle motion. A parameter of the satellite signal simulator 301 is set by inputting a group of simulation positioning parameters in the semi-blocked scenario in each simulation process, so that the satellite signal simulator 301 outputs a satellite signal in this simulation. A motion parameter of the vehicle may include X time (for example, X is one hour) for which the vehicle drives straight at a constant speed, X time for which the vehicle drives straight at an acceleration A, or the like.

The satellite signal simulator 301 outputs a satellite signal in each simulation, and the satellite signal simulator 301 converts the output satellite signal into a radio frequency signal, and inputs the radio frequency signal to the to-be-measured positioning device 302, as shown in FIG. 3. The to-be-measured positioning device 302 may obtain, based on the radio frequency signal, a measurement position under the group of positioning parameters in the simulation, that is, a sample measurement position.

After the positioning accuracy evaluation apparatus determines position errors corresponding to the plurality of simulations, if the difference between the position errors corresponding to the at least two simulations is not greater than the sixth value, the positioning accuracy evaluation device may determine, as a positioning parameter interval set corresponding to one sub-scenario, the positioning parameter interval set obtained after the two groups of positioning parameters corresponding to the at least two simulations are combined. The correspondence between the sub-scenario in the semi-blocked scenario and the positioning parameter interval set may be obtained according to the foregoing method, so that subsequently, the positioning accuracy evaluation device directly determines, by using the correspondence between the sub-scenario and the positioning parameter interval set, a specific sub-scenario of the scenario in which the to-be-measured positioning device is located.

The correspondence that is determined through simulation and that is between the sub-scenario and the positioning parameter interval set is obtained in advance, and may be directly used when the positioning accuracy evaluation apparatus evaluates the scenario in which the to-be-measured positioning device is located.

Specifically, when there is the correspondence between the positioning parameter interval set and the sub-scenario, and the scenario in which the to-be-measured positioning device is located is the semi-blocked scenario, the positioning accuracy evaluation apparatus obtains a positioning parameter of the to-be-measured positioning device and the correspondence between the positioning parameter interval set and the sub-scenario; and the positioning accuracy evaluation apparatus determines, based on the positioning parameter of the to-be-measured positioning device and the correspondence between the positioning parameter interval set and the sub-scenario, a sub-scenario in which the to-be-measured positioning device is located. The positioning parameter includes one of the quantity of different satellite signals received by the to-be-measured positioning device, the PDOP value, the duration of low-quality positioning, and the interval duration of low-quality positioning. Alternatively, the positioning parameter includes at least two of the quantity of different satellite signals received by the to-be-measured positioning device, the PDOP value, the duration of low-quality positioning, the interval duration of low-quality positioning, and the occurrence frequency of low-quality positioning. In this way, when the scenario in which the to-be-measured positioning device is located is the semi-blocked scenario, a specific sub-scenario of the scenario in which the to-be-measured positioning device is located may be further accurately determined based on the positioning parameter of the to-be-measured positioning device and the correspondence between the positioning parameter interval set and the sub-scenario. Then, the positioning accuracy of the to-be-measured positioning device in the sub-scenario is subsequently obtained.

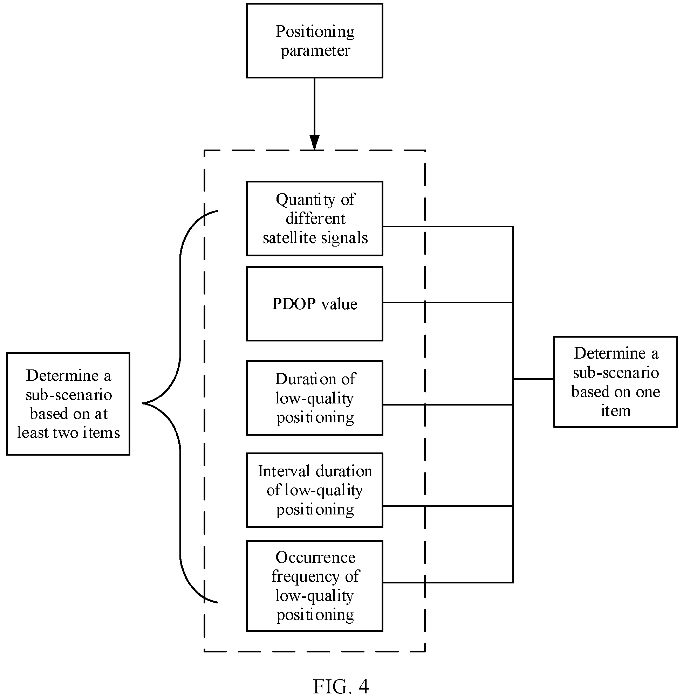

In an example, in the semi-blocked scenario, when the to-be-measured positioning device is a GNSS and INS integrated navigation device, the positioning accuracy evaluation apparatus may directly determine, according to the foregoing method and any one item of the quantity of different satellite signals received by the to-be-measured positioning device, the PDOP value, the duration of low-quality positioning, and the interval duration of low-quality positioning, a specific sub-scenario of the scenario in which the to-be-measured positioning device is located; or may be directly determine, according to the foregoing method and at least two items of the quantity of different satellite signals received by the to-be-measured positioning device, the PDOP value, the duration of low-quality positioning, the interval duration of low-quality positioning, and the occurrence frequency of low-quality positioning, a specific sub-scenario of a scenario in which the to-be-measured positioning device is located. As shown in FIG. 4, FIG. 4 is a schematic diagram of determining the sub-scenario in which the to-be-measured positioning device is located when the to-be-measured positioning device is the GNSS and INS integrated navigation device.

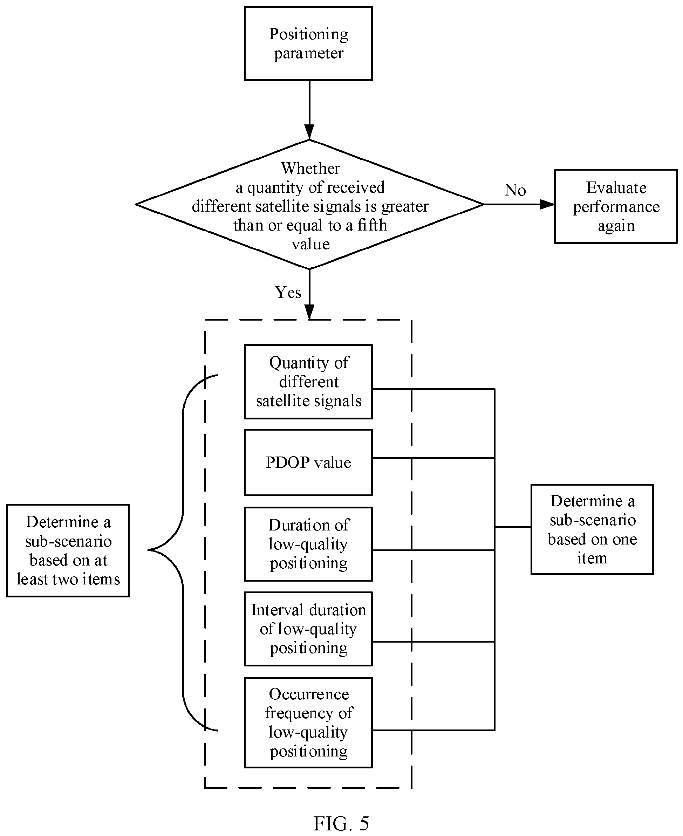

In another example, in the semi-blocked scenario, when the to-be-measured positioning device is a non-integrated GNSS satellite navigation device, the positioning accuracy evaluation apparatus needs to first determine whether the quantity of different satellite signals received by the to-be-measured positioning device is greater than or equal to a fifth value. If the quantity of different satellite signals received by the to-be-measured positioning device is greater than or equal to the fifth value, the positioning accuracy evaluation apparatus may directly determine, according to the foregoing method and any one item of the quantity of different satellite signals received by the to-be-measured positioning device, the PDOP value, the duration of low-quality positioning, and the interval duration of low-quality positioning, a specific sub-scenario of the scenario in which the to-be-measured positioning device is located, or may be directly determine, according to the foregoing method and at least two items of the quantity of different satellite signals received by the to-be-measured positioning device, the PDOP value, the duration of low-quality positioning, the interval duration of low-quality positioning, and the occurrence frequency of low-quality positioning, a specific sub-scenario of a scenario in which the to-be-measured positioning device is located. If the quantity of different satellite signals received by the to-be-measured positioning device is less than the fifth value, the positioning accuracy evaluation apparatus needs to perform performance evaluation again, and does not perform the foregoing process of determining the specific sub-scenario of the scenario in which the to-be-measured positioning device is located until the positioning accuracy evaluation apparatus determines that the quantity of different satellite signals received by the to-be-measured positioning device is greater than or equal to the fifth value. FIG. 5 is a schematic diagram of determining the sub-scenario in which the to-be-measured positioning device is located when the to-be-measured positioning device is the non-integrated GNSS navigation device.

The fifth value may be 3 + N, where N represents a quantity of different satellite navigation systems to which the satellite signals received by the to-be-measured positioning device belong. For example, when all the satellite signals come from a GPS, N = 1, and the fifth value may be 4. For another example, when the satellite signal comes from the GPS and a BDS separately, N = 2, and the fifth value may be 5. For another example, when the satellite signal comes from the GPS, the BDS, and a GLONASS separately, N = 3, and the fifth value may be 6. It should be noted that the fifth value being 4, 5, or 6 is merely an example, and the fifth value may alternatively have another value. This is not limited in this application.

In an optional implementation, the sub-scenarios included in the semi-blocked scenario may be one or more of the following six scenarios: an urban road overpass, a bridge hole, a single-sided blocked road, an interchange, a tree-lined road, or blocking by an urban high-rise building. It should be noted that the urban road overpass, the bridge hole, the single-sided blocked road, the interchange, the tree-lined road, or the blocking by the urban high-rise building is merely an example of the sub-scenario included in the semi-blocked scenario. This is not used as a limitation on the sub-scenario of the semi-blocked scenario.

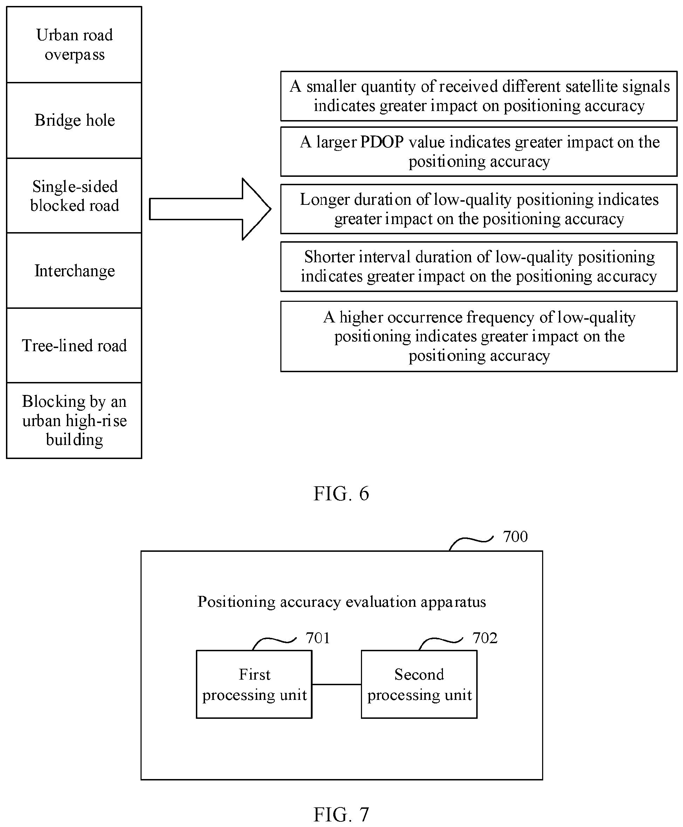

For example, when the one or more sub-scenarios are one or more of the urban road overpass, the bridge hole, the single-sided blocked road, the interchange, the tree-lined road, and the blocking by the urban high-rise building, in a process of determining the correspondence between the sub-scenario and the positioning parameter interval set in the simulation, it may be obtained that an impact relationship between the positioning accuracy of the to-be-measured positioning device and the sub-scenario may be shown in FIG. 6.

Step 202: The positioning accuracy evaluation apparatus determines positioning accuracy of the to-be-measured positioning device in the scenario.

Specifically, a conventional algorithm may be used for determining, by the positioning accuracy evaluation apparatus, the evaluation precision of the to-be-measured positioning device in any scenario. For example, the positioning accuracy evaluation apparatus may calculate positioning accuracy of the to-be-measured positioning device in the scenario for a plurality of times, then average the positioning accuracy determined for the plurality of times, obtain a value by using an intermediate value or by using another algorithm, and use the obtained value as the positioning accuracy of the to-be-measured positioning device in the scenario. This is not limited in this application.

According to the positioning accuracy evaluation method provided in embodiments of this application, the scenarios are distinguished based on the quantities of different satellite signals received by the to-be-measured positioning device at the same moment, and a scenario classification can be defined through a quantized value of the quantity of satellite signals, so that comprehensive scenario division can be obtained, evaluation of the positioning accuracy may be performed on the to-be-measured positioning device in all scenarios, and the evaluation of the positioning accuracy of the to-be-measured positioning device is objective and comprehensive. This meets requirements for high reliability and security of a satellite navigation device in the field of intelligent connected vehicles.

For example, in the conventional technology, due to environment differences in different regions, for example, test results of positioning accuracy of a same to-be-measured positioning device are not comparable between an area A and an area B, and therefore, positioning accuracy of the to-be-measured positioning device cannot be accurately evaluated. However, according to the positioning accuracy evaluation method provided in this embodiment of this application, a unified constraint rule may be proposed for all regions without considering impact of environment differences between different regions (for example, a city A and a city B). For example, the scenario is related to the quantity of different satellite signals received by the to-be-measured positioning device, so that evaluation rules of all area references may be the same, to obtain a uniform evaluation result of positioning accuracy of the to-be-measured positioning device. Therefore, according to the method provided in this application, a large-scale test and evaluation at an area level can be implemented, and a requirement for high reliability and security of a satellite navigation device in the field of intelligent connected vehicles can be met.

Based on the foregoing embodiments, an embodiment of this application further provides a positioning accuracy evaluation apparatus, configured to implement a function of the positioning accuracy evaluation apparatus in the embodiment shown in FIG. 2. Refer to FIG. 7. The positioning accuracy evaluation apparatus 700 may include a first processing unit 701 and a second processing unit 702. Specifically, when the positioning accuracy evaluation apparatus 700 implements the function of the positioning accuracy evaluation apparatus in the embodiment shown in FIG. 2, details may include the following.

The first processing unit 701 is configured to determine a scenario in which a to-be-measured positioning device is located, where the scenario is related to a quantity of different satellite signals received by the to-be-measured positioning device at a same moment. The second processing unit 702 is configured to determine positioning accuracy of the to-be-measured positioning device in the scenario.

In an optional implementation, the scenario may be an open scenario, a semi-blocked scenario, or a fully-blocked scenario.

In a specific implementation, the scenario is further related to a positioning impact factor, and the positioning impact factor may include one or more of the following: a position dilution of precision PDOP, a positioning state of the to-be-measured positioning device, and working duration of the to-be-measured positioning device in the positioning state.

For example, when determining the scenario in which the to-be-measured positioning device is located, the first processing unit 701 is specifically configured to: when the quantity of different satellite signals received by the to-be-measured positioning device is greater than or equal to a first value, and a PDOP value is less than a second value, and all the positioning states of the to-be-measured positioning device are fixed solutions, determine that the scenario in which the to-be-measured positioning device is located is the open scenario, when the quantity of different satellite signals received by the to-be-measured positioning device is greater than or equal to 0 and less than a third value, and the working duration of the to-be-measured positioning device in the positioning state is greater than a fourth value, determine that the scenario in which the to-be-measured positioning device is located is the fully-blocked scenario; and when the scenario in which the to-be-measured positioning device is located is not the open scenario and is not the fully-blocked scenario, determine that the scenario in which the to-be-measured positioning device is located is the semi-blocked scenario, where the first value is greater than the third value.

Specifically, the semi-blocked scenario may include one or more sub-scenarios.

In an optional implementation, the first processing unit 701 is specifically configured to: when the scenario in which the to-be-measured positioning device is located is the semi-blocked scenario, obtain a positioning parameter of the to-be-measured positioning device and a correspondence between a positioning parameter interval set and a sub-scenario; and determine, based on the positioning parameter of the to-be-measured positioning device and the correspondence between the positioning parameter interval set and the sub-scenario, a sub-scenario in which the to-be-measured positioning device is located. The positioning parameter includes one of the quantity of different satellite signals received by the to-be-measured positioning device, the PDOP value, duration of low-quality positioning, and interval duration of low-quality positioning. Alternatively, the positioning parameter includes at least two of the quantity of different satellite signals received by the to-be-measured positioning device, the PDOP value, the duration of low-quality positioning, the interval duration of low-quality positioning, and an occurrence frequency of low-quality positioning. The positioning parameter interval set includes one or more of the following: a quantity interval of the received different satellite signals, a PDOP value interval, a duration interval of low-quality positioning, an interval duration interval of low-quality positioning, and an occurrence frequency interval of low-quality positioning. The low-quality positioning indicates that a positioning error of the to-be-measured positioning device is greater than a preset threshold.

Optionally, when the to-be-measured positioning device is a non-integrated global navigation system GNSS satellite navigation device, the first processing unit 701 is further configured to determine that the quantity of different satellite signals received by the to-be-measured positioning device is greater than or equal to a fifth value.

For example, when the correspondence between the positioning parameter interval set and the sub-scenario is obtained based on the positioning parameter interval set that is obtained after two groups of simulation positioning parameters corresponding to at least two simulations are combined and that is determined when a difference between position errors corresponding to the at least two simulations is not greater than a sixth value in any sub-scenario. A position error corresponding to any simulation is determined based on a sample measurement position corresponding to the any simulation and an actual position corresponding to the sample measurement position, the sample measurement position is determined by the to-be-measured positioning device in the any simulation based on a received sample satellite signal output by a satellite signal simulator, the sample satellite signal is output by the simulation satellite signal under a group of simulation positioning parameters, and the group of simulation positioning parameters includes a quantity of received different satellite signals, a PDOP value, duration of low-quality positioning, interval duration of low-quality positioning, and an occurrence frequency of low-quality positioning in the any sub-scenario.

For example, the sub-scenario may be one or more of the following six scenarios: an urban road overpass, a bridge hole, a single-sided blocked road, an interchange, a tree-lined road, or blocking by an urban high-rise building.

Based on the foregoing positioning accuracy evaluation apparatus, the scenarios are distinguished based on the quantities of different satellite signals received by the to-be-measured positioning device at the same moment, and a scenario classification can be defined through a quantized value of the quantity of satellite signals, so that comprehensive scenario division can be obtained, evaluation of the positioning accuracy may be performed on the to-be-measured positioning device in all scenarios, and the evaluation of the positioning accuracy of the to-be-measured positioning device is objective and comprehensive. This meets requirements for high reliability and security of a satellite navigation device in the field of intelligent connected vehicles.

It should be noted that, in this embodiment of this application, division into the units is an example, and is merely a logical function division. In actual implementation, another division manner may be used. Functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

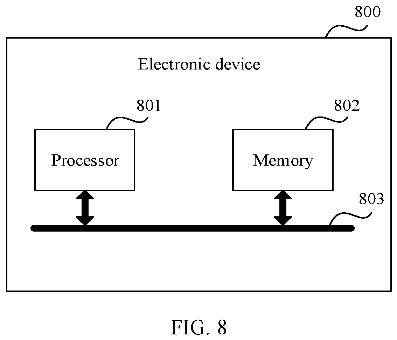

Based on the foregoing embodiments, an embodiment of this application further provides an electronic device, configured to implement a function of the positioning accuracy evaluation apparatus in the embodiment shown in FIG. 2. Refer to FIG. 8. The electronic device 800 may include a processor 801 and a memory 802. The processor 801 may be a central processing unit (central processing unit, CPU), a network processor (network processor, NP), or a combination of a CPU and an NP. The processor 801 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof. The processor 801 may implement the foregoing functions by using hardware or certainly by using hardware executing corresponding software.

Optionally, the electronic device 800 may further be a bus 803. The processor 801 and the memory 802 communicate by using the bus 803, or may communicate by using another means such as wireless transmission. Optionally, the bus 803 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is for representing the bus in FIG. 8, but this does not mean that there is only one bus or only one type of bus.

Specifically, the memory 802 is configured to store a program, and the processor 801 is configured to execute the program stored in the memory 802. The memory 802 stores the program, and the processor 801 may invoke the program stored in the memory 802 to perform the following operations:
determining a scenario in which a to-be-measured positioning device is located, where the scenario is related to a quantity of different satellite signals received by the to-be-measured positioning device at a same moment; and determining positioning accuracy of the to-be-measured positioning device in the scenario.

The scenario is an open scenario, a semi-blocked scenario, or a fully-blocked

The scenario is further related to a positioning impact factor, and the positioning impact factor includes one or more of the following: a position dilution of precision PDOP, a positioning state of the to-be-measured positioning device, and working duration of the to-be-measured positioning device in the positioning state.

When determining the scenario in which the to-be-measured positioning device is located, the processor 801 is specifically configured to: when the quantity of different satellite signals received by the to-be-measured positioning device is greater than or equal to a first value, and a PDOP value is less than a second value, and all the positioning states of the to-be-measured positioning device are fixed solutions, determine that the scenario in which the to-be-measured positioning device is located is the open scenario; when the quantity of different satellite signals received by the to-be-measured positioning device is greater than or equal to 0 and less than a third value, and the working duration of the to-be-measured positioning device in the positioning state is greater than a fourth value, determine that the scenario in which the to-be-measured positioning device is located is the fully-blocked scenario; and when the scenario in which the to-be-measured positioning device is located is not the open scenario and is not the fully-blocked scenario, determine that the scenario in which the to-be-measured positioning device is located is the semi-blocked scenario, where the first value is greater than the third value.

Optionally, the semi-blocked scenario may include one or more sub-scenarios.

For example, the processor 801 is specifically configured to: when the scenario in which the to-be-measured positioning device is located is the semi-blocked scenario, obtain a positioning parameter of the to-be-measured positioning device and a correspondence between a positioning parameter interval set and a sub-scenario; and determine, based on the positioning parameter of the to-be-measured positioning device and the correspondence between the positioning parameter interval set and the sub-scenario, a sub-scenario in which the to-be-measured positioning device is located. The positioning parameter includes one of the quantity of different satellite signals received by the to-be-measured positioning device, the PDOP value, duration of low-quality positioning, and interval duration of low-quality positioning. Alternatively, the positioning parameter includes at least two of the quantity of different satellite signals received by the to-be-measured positioning device, the PDOP value, the duration of low-quality positioning, the interval duration of low-quality positioning, and an occurrence frequency of low-quality positioning. The positioning parameter interval set includes one or more of the following: a quantity interval of the received different satellite signals, a PDOP value interval, a duration interval of low-quality positioning, an interval duration interval of low-quality positioning, and an occurrence frequency interval of low-quality positioning. The low-quality positioning indicates that a positioning error of the to-be-measured positioning device is greater than a preset threshold.

In an optional implementation, when the to-be-measured positioning device is a non-integrated global navigation system GNSS satellite navigation device, the processor 801 is further configured to determine that the quantity of different satellite signals received by the to-be-measured positioning device is greater than or equal to a fifth value.

Specifically, when the correspondence between the positioning parameter interval set and the sub-scenario is obtained based on the positioning parameter interval set that is obtained after two groups of simulation positioning parameters corresponding to at least two simulations are combined and that is determined when a difference between position errors corresponding to the at least two simulations is not greater than a sixth value in any sub-scenario. A position error corresponding to any simulation is determined based on a sample measurement position corresponding to the any simulation and an actual position corresponding to the sample measurement position, the sample measurement position is determined by the to-be-measured positioning device in the any simulation based on a received sample satellite signal output by a satellite signal simulator, the sample satellite signal is output by the simulation satellite signal under a group of simulation positioning parameters, and the group of simulation positioning parameters includes a quantity of received different satellite signals, a PDOP value, duration of low-quality positioning, interval duration of low-quality positioning, and an occurrence frequency of low-quality positioning in the any sub-

For example, the sub-scenario may be one or more of the following six scenarios: an urban road overpass, a bridge hole, a single-sided blocked road, an interchange, a tree-lined road, or blocking by an urban high-rise building.

Based on the foregoing electronic device, the scenarios are distinguished based on the quantities of different satellite signals received by the to-be-measured positioning device at the same moment, and a scenario classification can be defined through a quantized value of the quantity of satellite signals, so that comprehensive scenario division can be obtained, evaluation of the positioning accuracy may be performed on the to-be-measured positioning device in all scenarios, and the evaluation of the positioning accuracy of the to-be-measured positioning device is objective and comprehensive. This meets requirements for high reliability and security of a satellite navigation device in the field of intelligent connected vehicles.

An embodiment of this application further provides a computer-readable storage medium. The computer-readable storage medium is configured to store a computer program. When the computer program is executed by a computer, the computer may implement the positioning accuracy evaluation method provided in the foregoing method embodiments.

An unclaimed embodiment of this application further provides a computer program product. The computer program product is configured to store a computer program. When the computer program is executed by a computer, the computer may implement the positioning accuracy evaluation method provided in the foregoing method embodiments.

An unclaimed embodiment of this application further provides a chip, including a processor. The processor is coupled to a memory, and is configured to invoke a program in the memory, so that the chip implements the positioning accuracy evaluation method provided in the foregoing method embodiments.

This application is described with reference to flowcharts and/or block diagrams. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can guide the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. Therefore, this application is intended to cover these modifications and variations of this application provided that they fall within the scope of protection defined by the following claims of this application.

## Claims

1. A positioning accuracy evaluation method, comprising:
determining (201) a scenario in which a to-be-measured positioning device is located, wherein the scenario is related to a quantity of different satellite signals received by the to-be-measured positioning device at a same moment; and
determining (202) positioning accuracy of the to-be-measured positioning device in the scenario;
wherein the scenario is an open scenario, a semi-blocked scenario, or a fully-blocked scenario;
and wherein the scenario is further related to a positioning impact factor, and the positioning impact factor comprises one or more of the following: a position dilution of precision, PDOP, a positioning state of the to-be-measured positioning device, and working duration of the to-be-measured positioning device in the positioning state,
**characterized in that**
the determining (201) a scenario in which a to-be-measured positioning device is located comprises:
when the quantity of different satellite signals received by the to-be-measured positioning device is greater than or equal to a first value, a PDOP value is less than a second value, and all positioning states of the to-be-measured positioning device are fixed solutions, determining that the scenario in which the to-be-measured positioning device is located is the open scenario;
when the quantity of different satellite signals received by the to-be-measured positioning device is greater than or equal to 0 and less than a third value, and the working duration of the to-be-measured positioning device in the positioning state is greater than a fourth value, determining that the scenario in which the to-be-measured positioning device is located is the fully-blocked scenario; and
when the scenario in which the to-be-measured positioning device is located is not the open scenario and is not the fully-blocked scenario, determining that the scenario in which the to-be-measured positioning device is located is the semi-blocked scenario, wherein
the first value is greater than the third value.

2. The method according to claim 1, wherein the semi-blocked scenario comprises one or more sub-scenarios.

3. The method according to claim 2, wherein when the scenario in which the to-be-measured positioning device is located is the semi-blocked scenario, the method further comprises:
obtaining a positioning parameter of the to-be-measured positioning device and a correspondence between a positioning parameter interval set and a sub-scenario; and
determining, based on the positioning parameter of the to-be-measured positioning device and the correspondence between the positioning parameter interval set and the sub-scenario, a sub-scenario in which the to-be-measured positioning device is located, wherein
the positioning parameter comprises one of the quantity of different satellite signals received by the to-be-measured positioning device, the PDOP value, duration of low-quality positioning, and interval duration of low-quality positioning; or
the positioning parameter comprises at least two of the quantity of different satellite signals received by the to-be-measured positioning device, the PDOP value, duration of low-quality positioning, interval duration of low-quality positioning, and an occurrence frequency of low-quality positioning; and
the positioning parameter interval set comprises one or more of the following: a quantity interval of the received different satellite signals, a PDOP value interval, a duration interval of low-quality positioning, an interval duration interval of low-quality positioning, and an occurrence frequency interval of low-quality positioning, wherein
the low-quality positioning indicates that a positioning error of the to-be-measured positioning device is greater than a preset threshold.

4. The method according to claim 3, wherein when the to-be-measured positioning device is a non-integrated global navigation satellite system GNSS satellite navigation device, the method further comprises:
determining that the quantity of different satellite signals received by the to-be-measured positioning device is greater than or equal to a fifth value.

5. The method according to claim 3 or 4, wherein the correspondence between the positioning parameter interval set and the sub-scenario is obtained based on the positioning parameter interval set that is obtained after two groups of simulation positioning parameters corresponding to at least two simulations are combined and that is determined when a difference between position errors corresponding to the at least two simulations is not greater than a sixth value in any sub-scenario, wherein
a position error corresponding to any simulation is determined based on a sample measurement position corresponding to the any simulation and an actual position corresponding to the sample measurement position, the sample measurement position is determined by the to-be-measured positioning device in the any simulation based on a received sample satellite signal output by a satellite signal simulator, the sample satellite signal is output by the satellite signal simulator under a group of simulation positioning parameters, and the group of simulation positioning parameters comprises a quantity of received different satellite signals, a PDOP value, duration of low-quality positioning, interval duration of low-quality positioning, and an occurrence frequency of low-quality positioning in the any sub-scenario.

6. The method according to any one of claims 2 to 5, wherein the sub-scenario is one or more of the following six scenarios: an urban road overpass, a bridge hole, a single-sided blocked road, an interchange, a tree-lined road, or blocking by an urban high-rise building.

7. A positioning accuracy evaluation apparatus (700), comprising units configured to perform the steps in the method according to any one of claims 1 to 6.

8. A computer-readable storage medium (802), comprising a program, wherein when the program is executed by a processor, the method according to any one of claims 1 to 6 is performed.

## Patentansprüche

1. Verfahren zur Bestimmung der Positionierungsgenauigkeit, umfassend:
Ermitteln (201) eines Szenarios, in dem sich eine zu messende Positionierungsvorrichtung befindet, wobei das Szenario eine Anzahl verschiedener Satellitensignale betrifft, die von der zu messenden Positionierungsvorrichtung zu einem gleichen Zeitpunkt empfangen werden; und
Ermitteln (202) der Positionierungsgenauigkeit der zu messenden Positionierungsvorrichtung in dem Szenario;
wobei das Szenario ein offenes Szenario, ein halbblockiertes Szenario oder ein vollständig blockiertes Szenario ist;
und wobei das Szenario ferner einen Positionierungseinflussfaktor betrifft und der Positionierungseinflussfaktor eines oder mehrere der Folgenden umfasst: eine Positionsverdünnung der Präzision, PDOP, einen Positionierungszustand der zu messenden Positionierungsvorrichtung und eine Arbeitsdauer der zu messenden Positionierungsvorrichtung in dem Positionierungszustand,
**dadurch gekennzeichnet, dass**
das Ermitteln (201) eines Szenarios, in dem sich eine zu messende Positionierungsvorrichtung befindet, Folgendes umfasst:
wenn die Anzahl verschiedener Satellitensignale, die von der zu messenden Positionierungsvorrichtung empfangen werden, größer oder gleich einem ersten Wert ist, ein PDOP-Wert kleiner als ein zweiter Wert ist und alle Positionierungszustände der zu messenden Positionierungsvorrichtung feste Lösungen sind, Ermitteln, dass das Szenario, in dem sich die zu messende Positionierungsvorrichtung befindet, das offene Szenario ist;
wenn die Anzahl verschiedener Satellitensignale, die von der zu messenden Positionierungsvorrichtung empfangen werden, größer oder gleich 0 und kleiner als ein dritter Wert ist und die Arbeitsdauer der zu messenden Positionierungsvorrichtung in dem Positionierungszustand größer als ein vierter Wert ist, Ermitteln, dass das Szenario, in dem sich die zu messende Positionierungsvorrichtung befindet, das vollständig blockierte Szenario ist; und
wenn das Szenario, in dem sich die zu messende Positionierungsvorrichtung befindet, nicht das offene Szenario und nicht das vollständig blockierte Szenario ist, Ermitteln, dass das Szenario, in dem sich die zu messende Positionierungsvorrichtung befindet, das halbblockierte Szenario ist, wobei
der erste Wert größer ist als der dritte Wert.

2. Verfahren nach Anspruch 1, wobei das halbblockierte Szenario ein oder mehrere Teilszenarien umfasst.

3. Verfahren nach Anspruch 2, wobei, wenn das Szenario, in dem sich die zu messende Positionierungsvorrichtung befindet, das halbblockierte Szenario ist, das Verfahren ferner Folgendes umfasst:
Erlangen eines Positionierungsparameters der zu messenden Positionierungsvorrichtung und einer Entsprechung zwischen einem Positionierungsparameter-Intervallsatz und einem Teilszenario; und
Ermitteln eines Teilszenarios, in dem sich die zu messende Positionierungsvorrichtung befindet, basierend auf dem Positionierungsparameter der zu messenden Positionierungsvorrichtung und der Entsprechung zwischen dem Positionierungsparameter-Intervallsatz und dem Teilszenario, wobei
der Positionierungsparameter eines der Anzahl verschiedener Satellitensignale, die von der zu messenden Positionierungsvorrichtung empfangen werden, den PDOP-Wert, die Dauer der Positionierung mit schlechter Qualität und die Intervalldauer der Positionierung mit schlechter Qualität umfasst; oder
der Positionierungsparameter mindestens zwei der Anzahl verschiedener Satellitensignale, die von der zu messenden Positionierungsvorrichtung empfangen werden, den PDOP-Wert, die Dauer der Positionierung mit schlechter Qualität, die Intervalldauer der Positionierung mit schlechter Qualität und eine Häufigkeit des Auftretens der Positionierung mit schlechter Qualität umfasst; und
der Positionierungsparameter-Intervallsatz eines oder mehrere der Folgenden umfasst: ein Anzahlintervall der empfangenen verschiedenen Satellitensignale, ein PDOP-Wert-Intervall, ein Dauerintervall der Positionierung mit schlechter Qualität, ein Intervalldauerintervall der Positionierung mit schlechter Qualität und ein Häufigkeitsintervall des Auftretens der Positionierung mit schlechter Qualität, wobei
die Positionierung mit schlechter Qualität anzeigt, dass ein Positionierungsfehler der zu messenden Positionierungsvorrichtung größer ist als ein vorgegebener Schwellenwert.

4. Verfahren nach Anspruch 3, wobei, wenn die zu messende Positionierungsvorrichtung eine nicht-integrierte GNSS-Satellitennavigationsvorrichtung ist, das Verfahren ferner Folgendes umfasst:
Ermitteln, dass die Anzahl verschiedener Satellitensignale, die von der zu messenden Positionierungsvorrichtung empfangen werden, größer oder gleich einem fünften Wert ist.

5. Verfahren nach Anspruch 3 oder 4, wobei die Entsprechung zwischen dem Positionierungsparameter-Intervallsatz und dem Teilszenario basierend auf dem Positionierungsparameter-Intervallsatz erlangt wird, der erlangt wird, nachdem zwei Gruppen von Simulations-Positionierungsparametern, die mindestens zwei Simulationen entsprechen, kombiniert wurden, und der bestimmt wird, wenn eine Differenz zwischen Positionsfehlern, die den mindestens zwei Simulationen entsprechen, nicht größer als ein sechster Wert in einem beliebigen Teilszenario ist, wobei
ein Positionsfehler, der einer beliebigen Simulation entspricht, basierend auf einer Mustermessposition, die der beliebigen Simulation entspricht, und einer tatsächlichen Position, die der Mustermessposition entspricht, bestimmt wird, wobei die Mustermessposition von der zu messenden Positionierungsvorrichtung in der beliebigen Simulation basierend auf einem empfangenen Mustersatellitensignal bestimmt wird, das von einem Satellitensignalsimulator ausgegeben wird, das Mustersatellitensignal von dem Satellitensignalsimulator unter einer Gruppe von Simulationspositionierungsparametern ausgegeben wird, und die Gruppe von Simulationspositionierungsparametern eine Anzahl von empfangenen verschiedenen Satellitensignalen, einen PDOP-Wert, eine Dauer einer Positionierung mit schlechter Qualität, eine Intervalldauer einer Positionierung mit schlechter Qualität und eine Häufigkeit des Auftretens einer Positionierung mit schlechter Qualität in dem beliebigen Teilszenario umfasst.

6. Verfahren nach einem der Ansprüche 2 bis 5, wobei das Teilszenario eines oder mehrere der folgenden sechs Szenarien ist: eine städtische Straßenüberführung, ein Brückenloch, eine einseitig gesperrte Straße, eine Kreuzung, eine von Bäumen gesäumte Straße oder eine Sperrung durch ein städtisches Hochhaus.

7. Vorrichtung zur Bestimmung der Positionierungsgenauigkeit (700), umfassend Einheiten, die konfiguriert sind, um die Schritte des Verfahrens nach einem der Ansprüche 1 bis 6 durchzuführen.

8. Computerlesbares Speichermedium (802), umfassend ein Programm, wobei, wenn das Programm durch einen Prozessor ausgeführt wird, das Verfahren nach einem der Ansprüche 1 bis 6 durchgeführt wird.

## Revendications

1. Procédé d'évaluation de précision de positionnement, comprenant :
la détermination (201) d'un scénario dans lequel un dispositif de positionnement à mesurer est situé, dans lequel le scénario est lié à une quantité de signaux satellites différents reçus par le dispositif de positionnement à mesurer à un même moment ; et
la détermination (202) d'une précision de positionnement du dispositif de positionnement à mesurer dans le scénario ;
dans lequel le scénario est un scénario ouvert, un scénario semi-bloqué ou un scénario totalement bloqué ;
et dans lequel le scénario est également lié à un facteur d'impact de positionnement, et le facteur d'impact de positionnement comprend un ou plusieurs des éléments suivants : une dilution de précision de position, PDOP, un état de positionnement du dispositif de positionnement à mesurer et la durée de fonctionnement du dispositif de positionnement à mesurer dans l'état de positionnement,
**caractérisé en ce que**
la détermination (201) d'un scénario dans lequel un dispositif de positionnement à mesurer est situé comprend :
lorsque la quantité de signaux satellites différents reçus par le dispositif de positionnement à mesurer est supérieure ou égale à une première valeur, une valeur PDOP est inférieure à une deuxième valeur, et tous les états de positionnement du dispositif de positionnement à mesurer sont des solutions fixes, la détermination que le scénario dans lequel le dispositif de positionnement à mesurer est situé est le scénario ouvert ;
lorsque la quantité de signaux satellites différents reçus par le dispositif de positionnement à mesurer est supérieure ou égale à 0 et inférieure à une troisième valeur, et que la durée de fonctionnement du dispositif de positionnement à mesurer dans l'état de positionnement est supérieure à une quatrième valeur, la détermination que le scénario dans lequel le dispositif de positionnement à mesurer est situé est un scénario totalement bloqué ; et
lorsque le scénario dans lequel le dispositif de positionnement à mesurer est situé n'est ni un scénario ouvert ni un scénario totalement bloqué, la détermination que le scénario dans lequel le dispositif de positionnement à mesurer est situé est le scénario semi-bloqué, dans lequel la première valeur est supérieure à la troisième valeur.

2. Procédé selon la revendication 1, dans lequel le scénario semi-bloqué comprend un ou plusieurs sous-scénarios.

3. Procédé selon la revendication 2, dans lequel, lorsque le scénario dans lequel le dispositif de positionnement à mesurer est situé est le scénario semi-obstrué, le procédé comprend également :
l'obtention d'un paramètre de positionnement du dispositif de positionnement à mesurer et d'une correspondance entre un ensemble d'intervalles de paramètres de positionnement et un sous-scénario ; et
la détermination, sur la base du paramètre de positionnement du dispositif de positionnement à mesurer et de la correspondance entre l'ensemble d'intervalles de paramètres de positionnement et le sous-scénario, d'un sous-scénario dans lequel le dispositif de positionnement à mesurer est situé, dans lequel
le paramètre de positionnement comprend l'une de la quantité de signaux satellites différents reçus par le dispositif de positionnement à mesurer, de la valeur PDOP, d'une durée de positionnement de faible qualité, et d'une durée d'intervalle de positionnement de faible qualité ; ou
le paramètre de positionnement comprend au moins deux de la quantité de signaux satellites différents reçus par le dispositif de positionnement à mesurer, de la valeur PDOP, d'une durée de positionnement de faible qualité, d'une durée d'intervalle de positionnement de faible qualité et d'une fréquence d'occurrence de positionnement de faible qualité ; et
l'ensemble d'intervalles de paramètres de positionnement comprend un ou plusieurs des éléments suivants : un intervalle de quantité des signaux satellites différents reçus, un intervalle de valeur PDOP, un intervalle de durée de positionnement de faible qualité, un intervalle de durée d'intervalle de positionnement de faible qualité et un intervalle de fréquence d'occurrence de positionnement de faible qualité, dans lequel
le positionnement de faible qualité indique qu'une erreur de positionnement du dispositif de positionnement à mesurer est supérieure à un seuil prédéfini.

4. Procédé selon la revendication 3, dans lequel, lorsque le dispositif de positionnement à mesurer est un dispositif de navigation par satellite GNSS non intégré, le procédé comprend également :
la détermination que la quantité de signaux satellites différents reçus par le dispositif de positionnement à mesurer est supérieure ou égale à une cinquième valeur.

5. Procédé selon la revendication 3 ou 4, dans lequel la correspondance entre l'ensemble d'intervalles de paramètres de positionnement et le sous-scénario est obtenue sur la base de l'ensemble d'intervalles de paramètres de positionnement qui est obtenu après la combinaison de deux groupes de paramètres de positionnement de simulation correspondant à au moins deux simulations et qui est déterminé lorsqu'une différence entre les erreurs de position correspondant aux au moins deux simulations n'est pas supérieure à une sixième valeur dans un sous-scénario quelconque, dans lequel une erreur de position correspondant à une simulation quelconque est déterminée sur la base d'une position de mesure d'échantillon correspondant à la simulation quelconque et d'une position réelle correspondant à la position de mesure d'échantillon, la position de mesure d'échantillon est déterminée par le dispositif de positionnement à mesurer dans la simulation quelconque sur la base d'un signal satellite d'échantillon reçu et émis par un simulateur de signal satellite, le signal satellite d'échantillon est émis par le simulateur de signal satellite selon un groupe de paramètres de positionnement de simulation, et le groupe de paramètres de positionnement de simulation comprend une quantité de signaux satellites différents reçus, une valeur PDOP, une durée de positionnement de faible qualité, une durée d'intervalle de positionnement de faible qualité et une fréquence d'occurrence de positionnement de faible qualité dans le sous-scénario quelconque.

6. Procédé selon l'une quelconque des revendications 2 à 5, dans lequel le sous-scénario est un ou plusieurs des six scénarios suivants : un viaduc routier urbain, un trou de pont, une route bloquée à sens unique, un échangeur, une route bordée d'arbres ou un blocage par un immeuble urbain de grande hauteur.

7. Appareil d'évaluation de précision de positionnement (700), comprenant des unités configurées pour réaliser les étapes du procédé selon l'une quelconque des revendications 1 à 6.

8. Support de stockage lisible par ordinateur (802), comprenant un programme, dans lequel lorsque le programme est exécuté par un processeur, le procédé selon l'une quelconque des revendications 1 à 6 est réalisé.
